# EUROPÄISCHE PATENTANMELDUNG

(11) **EP 4 574 440 A1**
(43) Veröffentlichungstag der Anmeldung: **25.06.2025**
(21) Anmeldenummer: 23219283.1
(22) Anmeldetag: 21.12.2023
(51) Int. Cl.: B41M 5/52, D21H 19/24, G03C 3/00

(54) **KOMPOSTIERBARES TRÄGERMATERIAL FÜR FOTOPAPIERE**

(71) Anmelder: Felix Schoeller GmbH & Co. KG, 49086 Osnabrück (DE)
(72) Erfinder: Kozlowski, Christoph, 49076 Osnabrück (DE); Galinski, Yvonne, 49086 Osnabrück (DE); Rolfes, Kunibert, 49401 Damme (DE); Berner, Hans-Ulrich, 49176 Hilter (DE)
(74) Vertreter: Cohausz & Florack

(57) **Zusammenfassung**

Gegenstand der Erfindung ist ein kompostierbares Trägermaterial für Fotopapiere, umfassend eine Papierschicht sowie auf mindestens einer Seite der Papierschicht eine bioabbaubare Polymerschicht. Ein weiterer Gegenstand der Erfindung ist ein Fotopapier, umfassend ein erfindungsgemäßes kompostierbares Trägermaterial. Ferner sind Gegenstand der Erfindung die Verwendung des erfindungsgemäßen kompostierbaren Trägermaterials in einem erfindungsgemäßen Fotopapier sowie ein Verfahren zur Herstellung eines erfindungsgemäßen kompostierbaren Trägermaterials, umfassend die folgenden Schritte: (a) Bereitstellen einer Papierschicht; (b) Beschichten der Papierschicht auf mindestens einer Seite mit einer bioabbaubaren Polymerschicht; (c) Optionales Beschichten der bioabbaubaren Polymerschicht mit einer Haftschicht; (d) Beschichten der in Schritt (b) aufgebrachten bioabbaubaren Polymerschicht oder der im optionalen Schritt (c) aufgebrachten Haftschicht mit einer Bildempfangsschicht.

## Beschreibung

Die Erfindung betrifft einen kompostierbares Trägermaterial für Fotopapiere umfassend eine Papierschicht sowie auf mindestens einer Seite der Papierschicht eine bioabbaubare Polymerschicht, ein Fotopapier, umfassend das erfindungsgemäße Trägermaterial, die Verwendung des erfindungsgemäßen Trägermaterials in einem Fotopapier sowie ein Verfahren zur Herstellung des erfindungsgemäßen Trägermaterials.

Es ist bekannt, dass Trägermaterialien mit Schichten aus Polymeren eine hohe Lichtstabilität erreichen können, die beispielsweise für die Verwendung solcher Schichtträger in einem Fotopapier aber auch in anderen Produkten relevant ist. Durch die hohe Lichtstabilität dieser Trägermaterialien kann die von den Anwendern erwartete hohe Lebensdauer von bis zu 100 Jahren und mehr von Produkten, umfassend diese Trägermaterialien, insbesondere von Fotografien erreicht werden.

Als Polymere werden in diesen Trägermaterialien in der Regel synthetische Polyolefine, wie z.B. Polyethylen, eingesetzt, die eine hohe Wasserfestigkeit und Langzeitstabilität aufweisen.

Die im Stand der Technik bekannten Trägermaterialien für Fotopapiere sind daher in der Regel langlebig und der Verbund aus Papier und Polymer sowie weiterer Bestandteile garantieren diese Eigenschaften. Die hohe Langlebigkeit des Trägermaterials führt allerdings auch dazu, dass ein Recycling der damit hergestellten Produkte und eine Wiederverwertung der in den Trägermaterialien eingesetzten Materialien, nicht oder nur unter sehr hohem unwirtschaftlichem Aufwand möglich sind.

Ein nicht unerheblicher Teil der auf Fotopapieren entstandenen Fotografien und anderer Produkte, weist allerdings eine tatsächliche Verwendungsspanne von nur wenigen Jahren oder gar Monaten auf. In der Regel werden diese Produkte dann im Restmüll entsorgt und keinem gesonderten Recycling- Prozess zugeführt. Dies ist nachteilig, da die darin enthaltenen Wertstoffe durch Entsorgung im Restmüll für die Wiederverwertung verloren sind.

Im Stand der Technik werden Methoden zur Aufarbeitung und Trennung von entsprechenden Trägermaterialien beschrieben, die jedoch einen hohen Energieaufwand und eine nur beschränkte Verwendbarkeit beim erneuten Einsatz ermöglichen. Der durch diese Verfahren gewonnene Zellstoff lässt sich beispielsweise nicht mehr als Rohstoff für qualitativ anspruchsvolle Anwendungen, wie für ein Trägermaterial eines Fotopapiers verwenden.

Polymere, die besser zu rezyklieren sind, haben in der Regel den Nachteil, dass sie keine ausreichende Lichtstabilität und eine zu geringe generelle Beständigkeit aufweisen. Aliphatische Polyester, deren Bioabbaubarkeit bekannt ist, sind z.B. empfindlicher gegenüber UV-Strahlung und sichtbarem Licht als Polyethylen, welches ein aliphatisches Kohlenwasserstoffpolymer ist. Unter dem Einfluss von UV-Strahlung und sichtbarem Licht kann ein aliphatischer Polyester, wie beispielsweise Polymilchsäure, schnell oxidieren und seine Farbe und Transparenz verlieren. Dies kann dazu führen, dass er spröde und brüchig wird. Zudem ist die Verarbeitung solcher aliphatischen Polyester auf den gängigen Auftragsaggregaten eine zusätzliche Herausforderung.

Der vorliegenden Erfindung lag daher ausgehend von dem bekannten Stand der Technik die Aufgabe zugrunde ein Trägermaterial für Fotopapiere bereitzustellen, das die Anforderungen an eine hohe Lebensdauer und eine hohe Lichtstabilität erfüllt, aber dabei gleichzeitig eine gute Rezyklierbarkeit aufweist.

Gelöst wurde diese Aufgabe durch ein kompostierbares Trägermaterial für Fotopapiere gemäß Anspruch 1.

Weitere bevorzugte Ausgestaltungen der Erfindung sind den abhängigen Ansprüchen zu entnehmen.

Kompostierbar im Sinne der Erfindung bedeutet, dass das Trägermaterial nach DIN EN 13432 (Ausgabedatum 2000-12-00) mit Berichtigung 2 (Ausgabedatum 2007-10-00), auch bezeichnet als DIN EN 13432 Ber 2:2007-10, kompostierbar ist. Ein Material gilt als nach dieser Norm als kompostierbar, wenn nach 12-wöchiger Kompostierung und anschließendem feinen Sieben (Siebfraktion < 2 mm) maximal 10% des ursprünglichen Trockengewichts des Materials verbleibt und der Rest abgebaut wurde. Der Begriff "kompostierbar" ist dabei in Abgrenzung zum Begriff "bioabbaubar" zu verstehen. Bioabbaubar im Sinne der Erfindung bedeutet, dass das Trägermaterial nach DIN EN 13432 bioabbaubar ist. Ein Material gilt nach dieser Norm als bioabbaubar, wenn nach 6-monatiger Kompostierung 90% des organischen Materials abgebaut wurde.

Das erfindungsgemäße kompostierbare Trägermaterial ist daher industriell kompostierbar und erfüllt bevorzugt die Voraussetzungen der Norm DIN EN 13432 Ber 2 2:2007-10.

Das erfindungsgemäße kompostierbare Trägermaterial für Fotopapiere umfasst eine Papierschicht.

Als Papierschicht im Sinne der Erfindung wird ein ungeleimtes oder oberflächengeleimtes Papier verstanden.

Ein Papier kann neben Zellstofffasern, Leimungsmittel wie Alkylketendimere, Fettsäuren und/oder Fettsäuresalze, epoxydierte Fettsäureamide, Alkenyl- oder Alkylbernsteinsäureanhydrid, Nassfestmittel wie Polyamin-Polyamid-Epichlorhydrin, Trockenfestmittel wie anionische, kationische oder amphotere Polyamide oder kationische Stärken, optische Aufheller, Füllstoffe, Pigmente, Farbstoffe, Entschäumer und weitere in der Papierindustrie bekannte Hilfsmittel enthalten.

Das Papier kann auf einer Fourdrinier- oder einer Yankee-Papiermaschine (Zylinder-Papiermaschine) hergestellt werden. Das Flächengewicht des Papiers kann 50 bis 250 g/m², insbesondere 80 bis 180 g/m² betragen.

Das Papier kann in unverdichteter oder verdichteter Form (geglättet) eingesetzt werden. Besonders gut geeignet sind Papiere mit einer Dichte von 0,8 bis 1,2 g/cm³, insbesondere mit einer Dichte von 0,9 bis 1,1 g/cm³.

Als Zellstofffasern können beispielsweise gebleichter Hartholz-Kraftzellstoff (LBKP), gebleichter Nadelholz-Kraftzellstoff (NBKP), gebleichter Laubholzsulfit-zellstoff (LBSP) oder gebleichter Nadelholzsulfitzellstoff (NBSP) eingesetzt werden. Es können auch aus Papierabfällen gewonnene Zellstofffasern verwendet werden. Die genannten Zellstofffasern können auch gemischt eingesetzt werden und Anteile anderer Fasern, zum Beispiel bis zu 50 Masse-% Kunstharzfasern, zugemischt werden. Bevorzugt jedoch werden Zellstofffasern aus 100% Laubholzzellstoff eingesetzt. Die mittlere Faserlänge des ungemahlenen Zellstoffs beträgt vorzugsweise 0,5 bis 0,85 mm (Kajaani-Messung).

Als Füllstoffe können beispielsweise Kaoline, Calciumcarbonat in seinen natürlichen Formen wie Kalkstein, Marmor oder Dolomitstein, gefälltes Calciumcarbonat, Calciumsulfat, Bariumsulfat, Titandioxid, Talkum, Silica, Aluminiumoxid und deren Gemische im Papier eingesetzt werden.

Das Papier kann oberflächengeleimt sein. Hierzu geeignete Leimungsmittel sind beispielsweise Polyvinylalkohol oder oxidierte Stärke. Gemäß einer besonderen Ausführungsform der Erfindung kann das Leimungsmittel zusätzlich mindestens ein Pigment enthalten. Das Pigment ist vorzugsweise ausgewählt aus der Gruppe, bestehend aus Metalloxiden, Silikaten, Carbonaten, Sulfiden oder Sulfaten sowie deren Mischungen. In der Praxis besonders bewährt haben sich Pigmente wie Kaoline, Talkum, Calciumcarbonat und/oder Bariumsulfat. Durch die Zugabe von Pigment zum Leimungsmittel lässt sich die Oberflächenbeschaffenheit des Papiers, insbesondere dessen Glätte, verbessern.

Das erfindungsgemäße kompostierbare Trägermaterial umfasst auf mindestens einer Seite der Papierschicht eine bioabbaubare Polymerschicht.

Das erfindungsgemäße kompostierbare Trägermaterial kann auch auf beiden Seiten der Papierschicht eine bioabbaubare Polymerschicht aufweisen.

Gemäß einer bevorzugten Ausführungsform des erfindungsgemäßen Trägermaterials umfasst die bioabbaubare Polymerschicht mindestens ein bioabbaubares Polymer und optional mindestens einen Füllstoff.

Die Art des in der bioabbaubaren Polymerschicht eingesetzten mindestens einen bioabbaubaren Polymers ist dabei grundsätzlich nicht begrenzt. Es können sowohl bioabbaubare erdölbasierte Polymere als auch bioabbaubare Biopolymere oder deren Mischungen eingesetzt werden.

Bevorzugt ist das bioabbaubare Polymer ausgewählt aus Polyhydroxyalkanoaten, Polymilchsäure (PLA), Polybutylenadipat-co-butylenterephthalat (PBAT), Polybutylensebacat-co-butylenterephtalat (PBSeT), Thermoplastische Stärke (TPS), Celluloseacetat, Celluloseether, Celluloseester, Chitosan sowie deren Mischungen.

Bioabbaubare erdölbasierte Polymere, die in der bioabbaubaren Polymerschicht des erfindungsgemäßen Trägermaterials eingesetzt werden können, sind beispielsweise Polycaprolacton, Polybutylenadipat-co-butylenterephthalat (PBAT) und Polybutylensuccinat, Polybutylensebacat-co-butylenterephtalat (PBSeT) sowie Analoga von PBAT oder PBSeT in denen das Monomer Terephthalsäure gegen 2,5-Furandicarbonsäure ausgetauscht wurde, die aus nachwachsenden Rohstoffen hergestellt werden kann. Bioabbaubare erdölbasierte Polymere im Sinne der vorliegenden Erfindung sind daher zu mehr als 51 mol% aus Monomeren aufgebaut, die aus Erdöl gewonnen wurden, können aber weniger als 49 mol% Monomere umfassen, die nicht aus Erdöl gewonnen wurden.

Biopolymere im Sinne der Erfindung sind Polymere, die ausschließlich auf natürlichen oder erneuerbaren Ressourcen basieren und biologisch abbaubar oder kompostierbar sind. Sie werden auch als biobasierte Polymere bezeichnet.

Im Gegensatz zu erdölbasierten Polymeren, die im Wesentlichen aus nicht erneuerbaren Ressourcen wie Erdöl hergestellt werden, werden Biopolymere zu 100% aus nachwachsenden Rohstoffen wie Maisstärke, Cellulose, Sojaprotein und anderen pflanzlichen oder tierischen Quellen hergestellt.

Ein bekanntes Beispiel für ein Biopolymer ist Polymilchsäure (PLA), das aus fermentierter Maisstärke hergestellt wird und in vielen Anwendungen als Alternative oder ergänzend zu erdölbasierten Polymeren verwendet wird. Andere Beispiele für Biopolymere sind Celluloseacetat, Celluloseester, Stärkeester, Polycaprolacton und Polyhydroxyalkanoate (PHA).

Es gibt unterschiedliche Arten von Biopolymeren, die aus verschiedenen natürlichen Ressourcen hergestellt werden können. Nachfolgend werden einige bekannte Beispiele für Biopolymere aufgezählt:
1. Cellulose: Cellulose ist der Hauptbestandteil von Pflanzenzellwänden und kann zu verschiedenen Biopolymeren verarbeitet werden, wie z.B. Celluloseacetat, Celluloseester und Celluloseethers.
2. Stärke: Stärke ist eine Kohlenhydratverbindung, die in vielen Pflanzen vorkommt und zur Herstellung von Biopolymeren wie Stärkeacetat, Stärkeester und Stärkeethers verwendet wird.
3. Polymilchsäure (PLA): PLA wird aus fermentierter Maisstärke hergestellt und ist biologisch abbaubar. Es wird häufig für Verpackungen und Einwegartikel verwendet.
4. Polyhydroxyalkanoate (PHA): PHA sind eine Gruppe von Biopolymeren, die von Bakterien produziert werden und biologisch abbaubar sind. Sie können aus pflanzlichen Ölen, Zucker oder anderen Kohlenhydraten hergestellt werden.
5. Proteine: Proteine wie Kollagen, Gelatine und Sojaprotein können zu Biopolymeren verarbeitet werden, die für medizinische Anwendungen, Lebensmittelverpackungen und Textilien verwendet werden.
6. Chitosan: Chitosan ist ein Biopolymer, das aus Chitin gewonnen wird, das in Schalen von Krebstieren und Insekten vorkommt. Es wird für medizinische Anwendungen und als Beschichtung für Verpackungen verwendet.

Gemäß einer bevorzugten Ausführungsform des erfindungsgemäßen Trägermaterials enthält die bioabbaubare Polymerschicht mindestens ein bioabbaubares Biopolymer oder besteht daraus. Bevorzugt ist das mindestens eine bioabbaubare Biopolymer ausgewählt, aus der Gruppe, bestehend aus Polyhydroxyalkanoaten, Polymilchsäure (PLA), Thermoplastische Stärke (TPS), Celluloseacetat, Celluloseether, Celluloseester, Chitosan sowie deren Mischungen. Durch den Einsatz des mindestens einen bioabbaubaren Biopolymers in der bioabbaubaren Polymerschicht wird das Trägermaterial nachhaltiger im Vergleich zum Einsatz von nur bioabbaubaren erdölbasierten Polymeren in der bioabbaubaren Polymerschicht. Dabei versteht es sich von selbst, dass dieser Effekt mit zunehmendem Anteil des bioabbaubaren Biopolymers an der bioabbaubaren Polymerschicht zunimmt.

Bevorzugt ist das mindestens eine bioabbaubare Biopolymer Polymilchsäure. Es wurde überraschend gefunden, dass Polymilchsäure eine gute Lichtstabilität aufweist und zudem im Vergleich zu anderen Polymeren industriekompostierbar ist.

Gemäß einer bevorzugten Ausführungsform des erfindungsgemäßen Trägermaterials umfasst die bioabbaubare Polymerschicht, neben dem mindestens einen bioabbaubaren Polymer, optional mindestens einen Füllstoff. Die bioabbaubare Polymerschicht kann beispielsweise mindestens 30 Gew.-%, vorzugsweise 30 bis 99 Gew.-%, insbesondere 50 bis 95 Gew.-%, besonders bevorzugt 60 bis 90 Gew.-%, bioabbaubares Polymer, bezogen auf das Trockengewicht der gesamten bioabbaubaren Polymerschicht, und mindestens 1 Gew.-%, vorzugsweise 1 bis 30 Gew.-%, insbesondere 1 bis 20 Gew.-%, besonders bevorzugt 1 bis 10 Gew.-%, Füllstoff, bezogen auf das Trockengewicht der gesamten bioabbaubaren Polymerschicht, umfassen.

Als Füllstoffe für die bioabbaubare Polymerschicht eignen sich grundsätzlich die dem Fachmann bekannten üblichen Füllstoffe. Bevorzugt ist der Füllstoff ein anorganischer mineralbasierter Füllstoff, insbesondere ausgewählt, aus der Gruppe, bestehend aus Calciumcarbonat, Aluminiumoxid, Aluminiumhydroxid, Böhmit, Ton, kalzinierten Tonen, Kaolinen, Talkum, Kieselgur, Aluminiumtrihydrat, Kieselsäuren, Titandioxid, Zinksulfid sowie deren Mischungen.

Besonders bevorzugt wird als Füllstoff in der bioabbaubaren Polymerschicht des erfindungsgemäßen Trägermaterials Calciumcarbonat eingesetzt. Der Einsatz von Calciumcarbonat als Füllstoff in der bioabbaubaren Polymerschicht des erfindungsgemäßen Trägermaterials führt nicht nur zu einer deutlichen Beschleunigung der Kompostierbarkeit, sondern trägt zusätzlich dazu bei, in der direkten Umgebung, in der das Trägermaterial zerfällt, die Bodenqualität zu verbessern., indem es sowohl die Bodenstruktur verbessert als auch zusätzlich für eine Entsäuerung des Bodens sorgt. Ferner kann Calciumcarbonat vorteilhaft auch dazu beitragen, den Calciummangel im Boden zu beheben und hierbei zu einer gesunden für das Pflanzenwachstum günstigen Bodenqualität beitragen.

Es wurde überraschend festgestellt, dass die Zugabe eines Füllstoffs zu der bioabbaubaren Polymerschicht des erfindungsgemäßen Trägermaterials vorteilhaft zu einer beschleunigten Kompostierung sowie beschleunigten Wiederverwertungsraten des Trägermaterials führt.

Zusätzlich kann die mindestens eine bioabbaubare Polymerschicht weitere Hilfsstoffe wie optische Aufheller, Farbstoffe und Dispergierhilfsmittel enthalten.

Das erfindungsgemäße kompostierbare Trägermaterial weist bevorzugt eine hohe Lichtbeständigkeit im Xenon-Test bei einer Temperatur von 23°C, einer Luftfeuchtigkeit von 60 %, einer Bestrahlungszeit von 500 Stunden und einer Bestrahlungsintensität von 1,2 Watt/cm², mit Filter von 420 nm auf. Mit einer derartigen Lichtbeständigkeit weist das erfindungsgemäße kompostierbare Trägermaterial eine vergleichbare Lichtbeständigkeit auf, wie die derzeit bekannten lichtstabilen und langlebigen, aber nicht kompostierbaren Trägermaterialien für Fotopapiere.

Ein weiterer Gegenstand der Erfindung ist ein Fotopapier, umfassend ein erfindungsgemäßes kompostierbares Trägermaterial.

Das erfindungsgemäße Fotopapier weist bevorzugt neben dem erfindungsgemäßen kompostierbaren Trägermaterial auf der Sichtseite der mindestens einen bioabbaubaren Polymerschicht eine Bildempfangsschicht auf.

Mit der Sichtseite wird vorliegend die Seite der bioabbaubaren Polymerschicht des Trägermaterials verstanden, die der Papierschicht des Trägermaterials abgewandt ist und die vor Aufbringen der Bildempfangsschicht die äußerste Seite des Trägermaterials bildet.

Bevorzugt ist die Bildempfangsschicht ausgewählt ist aus einer Emulsionsschicht für die Silbersalzfotografie, einer toneraufnehmenden Schicht für die Elektrofotografie oder einer Tintenaufnahmeschicht für den Ink-Jet Druck.

Gemäß einer bevorzugten Ausführungsform des erfindungsgemäßen Fotopapiers ist das kompostierbare Trägermaterial beidseitig mit einer bioabbaubaren Polymerschicht beschichtet und weist auf jeder Sichtseite eine Bildempfangsschicht auf, wobei die Bildempfangsschicht ausgewählt ist aus einer toneraufnehmenden Schicht für die Elektrofotografie oder einer Tintenaufnahmeschicht für den Ink-Jet Druck.

Für den Fall, dass die Bildempfangsschicht eine Emulsionsschicht für die Silbersalzfotografie ist, so kann sich diese aus den für eine solche Emulsionsschicht dem Fachmann bekannten üblichen Komponenten zusammensetzen.

Für den Fall, dass die Bildempfangsschicht eine toneraufnehmende Schicht für die Elektrofotografie ist, so kann sich diese aus den für eine solche toneraufnehmende Schicht dem Fachmann bekannten üblichen Komponenten zusammensetzen.

Vorzugsweise enthält die toneraufnehmende Schicht einen wasserlöslichen oder wasserdispergierbaren Binder, ein feinteiliges anorganisches Pigment und ein antistatisch wirkendes Mittel.

Der Binder in der toneraufnehmenden Schicht kann jeder für Papierbeschichtungen gebräuchliche Binder sein, bevorzugt werden Stärke, Polyvinylalkohol, Acrylate oder Copolymere von Acrylaten mit anderen Monomeren verwendet. Besonders bevorzugte Binder sind Ethylenacrylsäure-Copolymere, insbesondere solche mit einem Schmelzbereich von 70 bis 100°C auf.

Das feinteilige Pigment in der toneraufnehmenden Schicht kann ein feinteiliges anorganisches Pigment, beispielsweise Siliciumdioxid, Aluminiumoxid, Aluminiumoxidhydrat, Aluminiumsilicat, Calciumcarbonat, Zinkoxid, Zinnoxid, Antimonoxid, Titandioxid Indiumoxid oder ein Mischoxid dieser Oxide sein. In einer bevorzugten Ausführungsform ist das feinteilige Pigment Zinkoxid, Zinnoxid, Antimonoxid, Titandioxid Indiumoxid oder ein Mischoxid dieser Oxide. Die feinteiligen Pigmente können einzeln oder als Mischungen in der toneraufnehmenden Schicht vorhanden sein.

Die feinteiligen Pigmente in der toneraufnehmenden Schicht weisen vorzugsweise eine mittlere Partikelgröße von kleiner als 1000 nm, besonders bevorzugt kleiner als 200 nm auf. Bevorzugt werden insbesondere Pigmente mit einer BET-Oberfläche von 30 m²/g bis 400 m²/g. Solche Pigmente können durch das Flammenverfahren oder durch nasschemische Fällungsverfahren erhalten werden.

Das antistatische Mittel in der toneraufnehmenden Schicht kann ein elektrisch leitfähiges Polymer oder ein elektrisch leitfähiges Pigment sein. Es können auch Mischungen von antistatischen Mitteln verwendet werden.

Elektrisch leitfähige Polymere können solche sein, bei denen die elektrische Ladung in Form von Ionen transportiert wird, wie Polystryolsulfonsäure. Bevorzugt werden aber Polymere, in den die elektrische Ladung in Form von Elektronen oder Defektelektronen transportiert werden, beispielsweise Polyaniline, Polythiophene oder andere. Besonders bevorzugt ist als leitfähiges Polymer mit Polystyrolsäure dotiertes Poly(3,4-ethylen-dioxythiophen) (PEDOT:PSS), welches zum Beispiel unter den Namen CLEVIOS^{®} oder ORGACON^{®} erhältlich ist. Die elektrisch leitfähigen Polymere sind erfindungsgemäß in einer Menge von 0,1 bis 50 Gew.-%, insbesondere 1,0 bis 4,0 Gew.-%, bezogen auf die Masse getrocknete Schicht, in der toneraufnehmenden Schicht enthalten. Wird ein Polymer als antistatisches Mittel in der toneraufnehmenden Schicht eingesetzt, kann dieses den wasserlöslichen oder wasserdispergierten Binder ganz oder teilweise ersetzten.

Leitfähige Pigmente können unter anderem aus Metallpulver oder Kohlenstoff bestehen. Bevorzugt werden jedoch Oxide wie Antimonoxid, Zinnoxid, Indiumoxid oder besonders bevorzugt Titandioxid oder Zinkoxid oder Mischoxide der Elemente Antimon, Indium, Titan, Zink oder Zinn. Die leitfähigen Pigmente weisen vorzugsweise eine mittlere Partikelgröße von kleiner als 1000 nm, besonders bevorzugt kleiner als 200 nm auf. Wird ein leitfähiges Pigment als antistatisches Mittel einsetzt, kann dieses auch gleichzeitig das feinteilige Pigment der toneraufnehmenden Schicht darstellen.

Die toneraufnehmende Schicht kann zusätzlich anionische oder nichtionische oberflächenaktive Mittel in einer Menge von 0,01 bis 4,0 Gew.-%, insbesondere 0,05 bis 2,5 Gew.-%, bezogen auf die getrocknete Schicht enthalten.

Die toneraufnehmende Schicht kann gegebenenfalls auch weitere Hilfsmittel enthalten, beispielsweise Mattierungsmittel, Farbstoffe, Vernetzungsmittel, Gleitmittel, Anti-Blocking-Mittel und andere übliche Additive.

Die Beschichtungsmasse zur Bildung der toneraufnehmenden Schicht kann mit allen in der Papierherstellung üblichen Auftragsaggregaten inline oder offline aufgebracht werden, wobei die Menge so gewählt wird, dass nach dem Trocknen das Auftragsgewicht höchstens 3 g/m², insbesondere 0,1 bis 2 g/m², bevorzugt 0,3 bis 0,7 g/m² beträgt. Die Beschichtungsmasse kann als Strich mit Hilfe eines üblichen, innerhalb der Extrusionsbeschichtungsanlage integrierten Auftragswerkes aufgetragen werden. Hierzu besonders gut geeignet ist beispielsweise ein 3-Walzenauftrag oder eine Rakelvorrichtung.

Auf die toneraufnehmende Schicht können weitere Schichten wie Schutzschichten oder glanzverbessernde Schichten aufgetragen werden. Das Auftragsgewicht solcher Schichten ist vorzugsweise kleiner als 1 g/m².

Für den Fall, dass die Bildempfangsschicht eine Tintenaufnahmeschicht für den Ink-Jet Druck ist, so können für die Tintenaufnahmeschicht alle bekannten Empfangsschichten für den Ink-Jet Druck eingesetzt werden. Hierbei handelt es sich meistens um hydrophile Beschichtungen, die wasserlösliche oder wasserdispergierbare Polymere enthalten.

Die Tintenaufnahmeschicht kann zusätzlich Füllstoffe, Pigmente, farbstofffixierende Substanzen, wie quartäre Polyammoniumsalze, und weitere, in solchen Schichten üblicherweise verwendete Hilfsstoffe enthalten. Ein geeignetes quartäres Polyammoniumsalz ist das Polydiallyldimethylammoniumchlorid.

Bevorzugt enthält die Tintenaufnahmeschicht ein Pigment und ein Bindemittel in einem Mengenverhältnis von 10:90 bis 90:10. Die Menge des Pigments in der Tintenaufnahmeschicht beträgt vorzugsweise 5 bis 80 Gew.-%, insbesondere jedoch 10 bis 60 Gew.-%, bezogen auf das Trockengewicht der Tintenaufnahmeschicht.

Das Pigment ist vorzugsweise ausgewählt aus Aluminiumoxid, Aluminiumhydroxid, Böhmit und Kieselsäuren (wie gefällte oder pyrogen erzeugte Kieselsäure).

Das Bindemittel kann ein wasserlösliches und/oder wasserdispergierbares Polymer sein, beispielsweise Polyvinylalkohol, Polyvinylpyrrolidon, Polyvinylacetat, Stärke, Gelatine, Carboxymethylcellulose, Ethylen/Vinylacetat, Styrol/Acrylsäure-ester-Copolymere oder deren Gemische. Als Polyvinylalkohol kann beispielsweise ein solcher mit einem Verseifungsgrad von 88 bis 99 % eingesetzt werden.

Die Tintenaufnahmeschicht kann eingefärbt werden. Die Einfärbung kann mit den gleichen Farbpigmenten und/oder Farbstoffen erfolgen, mit denen auch das Rohpapier eingefärbt wird. Die Menge (Konzentration) des Farbpigments und/oder Farbstoffs in der Tintenaufnahmeschicht, bezogen auf die getrocknete Tintenaufnahmeschicht, beträgt vorzugsweise etwa 45 bis 75 %, insbesondere 45 bis 65 % der Menge des Farbpigments und/oder Farbstoffs im Rohpapier, bezogen auf den Zellstoff (atro).

Das Auftragsgewicht der Tintenaufnahmeschicht kann 2 bis 25 g/m² betragen, insbesondere 3 bis 20 g/m², vorzugsweise jedoch 4 bis 15 g/m². Die Tintenaufnahmeschicht kann mit üblichen Auftragsverfahren wie Walzenauftrag-, Schlitzdüsenauftrag-, Gravur- oder Nipp-Verfahren, Curtain Coating, Luftbürsten- oder Rollrakeldosierung aufgetragen werden.

Zwischen der bioabbaubaren Polymerschicht und der Bildempfangsschicht kann sich optional eine Haftschicht befinden, um die Haftung der Bildempfangsschicht zu der bioabbaubaren Polymerschicht zu verbessern. An die Haftschicht werden außer der Bereitstellung einer zufriedenstellenden Haftung zwischen der Bildempfangsschicht und der bioabbaubaren Polymerschicht keine besonderen Anforderungen gestellt. Als Haftschicht kann daher eine der dem Fachmann für diese Zwecke als geeignet bekannten üblichen Haftschichten eingesetzt werden.

Ein weiterer Gegenstand der Erfindung ist die Verwendung des erfindungsgemäßen kompostierbaren Trägermaterials in einem erfindungsgemäßen Fotopapier.

Schließlich ist ebenfalls Gegenstand der Erfindung ein Verfahren zur Herstellung eines erfindungsgemäßen Fotopapiers, umfassend die folgenden Schritte:
(a) Bereitstellen einer Papierschicht;
(b) Beschichten der Papierschicht auf mindestens einer Seite mit einer bioabbaubaren Polymerschicht;
(c) Optionales Beschichten der bioabbaubaren Polymerschicht mit einer Haftschicht;
(d) Beschichten der in Schritt (b) aufgebrachten bioabbaubaren Polymerschicht oder der im optionalen Schritt (c) aufgebrachten Haftschicht mit einer Bildempfangsschicht.

Das erfindungsgemäße Verfahren umfasst in Schritt (a) die Bereitstellung einer Papierschicht. Für die Ausgestaltung und Zusammensetzung der Papierschicht gilt dabei das oben im Zusammenhang mit dem erfindungsgemäßen Trägermaterial Gesagte entsprechend.

Gemäß Schritt (b) des erfindungsgemäßen Verfahrens wird die in Schritt (a) bereitgestellte Papierschicht auf mindestens einer Seite mit einer bioabbaubaren Polymerschicht beschichtet. Das Beschichten kann dabei mit den dem Fachmann bekannten üblichen Methoden erfolgen. Bevorzugt erfolgt das Beschichten in Schritt (b) mittels Extrusion, Coextrusion, Vorhangbeschichtung, Aufrakeln, Filmpresse, Leimpresse, Kaschieren oder Laminieren. Für die Ausgestaltung und Zusammensetzung der bioabbaubaren Polymerschicht gilt dabei das oben im Zusammenhang mit dem erfindungsgemäßen Trägermaterial Gesagte entsprechend.

An Schritt (b) des erfindungsgemäßen Verfahrens kann sich optionalSchritt (c) anschließen. Gemäß dem optionalen Schritt (c) des erfindungsgemäßen Verfahrens wird die in Schritt (b) bereitgestellte beschichtete Papierschicht auf mindestens einer Seite mit einer Haftschicht beschichtet. Der Auftrag der Haftschicht kann dabei mit den dem Fachmann bekannten üblichen Methoden erfolgen. Bevorzugt erfolgt das Beschichten in Schritt (c) mittels Coextrusion, Extrusion, Vorhangbeschichtung, Aufrakeln, Filmpresse, Leimpresse, Kaschieren oder Laminieren.

Gemäß einer alternativen Ausführungsform des erfindungsgemäßen Verfahrens kann das Aufbringen der bioabbaubaren Polymerschicht in Schritt (b) und das Aufbringen der Haftschicht in Schritt (c) gleichzeitig mittels Coextrusion erfolgen.

An Schritt (b) des erfindungsgemäßen Verfahrens bzw. an den optionalen Schritt (c), falls vorhanden, kann sich ferner Schritt (d) anschließen. In Schritt (d) des erfindungsgemäßen Verfahrens wird die in Schritt (b) aufgebrachte bioabbaubaren Polymerschicht oder die im optionalen Schritt (c) aufgebrachte Haftschicht mit einer Bildempfangsschicht beschichtet. Das Beschichten kann dabei mit den dem Fachmann bekannten üblichen Methoden erfolgen. Bevorzugt erfolgt das Beschichten in Schritt (d) mittels Vorhangbeschichtung, Aufrakeln, Filmpresse, Leimpresse, Kaschieren oder Laminieren. Für die Ausgestaltung und Zusammensetzung der Bildempfangsschicht gilt dabei das oben im Zusammenhang mit dem erfindungsgemäßen Trägermaterial Gesagte entsprechend.

Die folgenden Beispiele dienen der weiteren Erläuterung der Erfindung.

### Beispiele

### Prüfmethoden

### Oberflächenwiderstand

Der Oberflächenwiderstand wird mit einer Kammelektrode nach DIN 53483 bestimmt.

### Verklebungstest

Zwei Blätter des Trägermaterials in DIN-A4-Größe werden bei 23°C und 50 % relativer Luftfeuchtigkeit aufeinandergelegt und mit einem 10 kg-Gewicht belastet. Nach 65 h werden die Blätter manuell getrennt und das Haften / Verkleben folgendermaßen bewertet:

| | |
|---|---|
| +: | keine Verklebung, |
| o: | leichte Verklebung, |
| -: | starke Verklebung. |

### Emulsionshaftung

Die Oberflächen der Materialien werden mit einer Silberbromid-Gelatine-Fotoemulsion bestrichen und nach Trocknung bei 23°C / 50% RF die Haftung durch Aufkleben und Wiederabziehen eines Klebestreifens TESA 4104 folgendermaßen beurteilt:

| | |
|---|---|
| +: | Emulsion bleibt unbeschädigt, |
| o: | Emulsion etwas abgerissen, |
| -: | Emulsion vollständig vom Träger abgerissen. |

### Xenontest

Der Xenontest ist ein Verfahren zur Prüfung der Lichtbeständigkeit von Materialien, insbesondere von Farben, Lacken und Kunststoffen. Das Verfahren simuliert die Auswirkungen von Sonnenlicht, indem es Xenon-Licht verwendet, das ein breites Spektrum von Wellenlängen und Intensitäten ausstrahlt. Die Lichtbeständigkeit selbst wird anhand von Messungen L*-; a*-; b*-Werte der Trägermaterialien vor und nach der Bestrahlung der Proben und Ermittlung des Farbabstands ΔE entsprechend der Norm DIN EN ISO/CIE 11664-4: 2020-03, Abschnitt 5.3, ermittelt. ΔE ist eine Maßeinheit, die in der Farbwissenschaft verwendet wird, um den Unterschied zwischen zwei Farben zu quantifizieren. Dieser Parameter wird verwendet, um festzustellen, wie gut ein Material Farben reproduziert oder wie stabil die Farbwiedergabe über die Zeit ist, d.h. wie stabil die Farbänderungen aufgrund von Umwelteinflüssen, Lichtexposition und Temperaturschwankungen sind. Je niedriger der ΔE -Wert, desto geringer ist der Farbunterschied und desto stabiler ist die Farbe gegenüber Umwelteinflüssen, Lichtexposition und Temperaturschwankungen.

Zunächst wurden die in Tabelle 1 aufgeführten Trägermaterialien vor der Bestrahlung mittels des Spektralphotometers SpectroEye vermessen und die L*-; a*-; b*-Werte bestimmt.

Anschließend wurden die Trägermaterialien bei 23°C und einer relativen Luftfeuchtigkeit von 60% mit einer Strahlungsintensität von 50 Watt/m² und einem Filter von 320 nm bestrahlt. Die Belichtung der Proben erfolgt im Atlas Weatherometer 3000ci in 10 Durchgängen á 50 Std. (= 500 h).

Nach Abschluss der Bestrahlung wurden für die Trägermaterialien nochmals die L*-; a*-; b*-Werte mittels des Spektralphotometers SpectroEye bestimmt.

Der ΔE-Wert wird aus den durch die Messungen vor und nach der Bestrahlung ermittelten L*-; a*-; b*-Werten entsprechend der DIN EN ISO/CIE 11664-4: 2020-03, Abschnitt 5.3 ermittelt.

Anhand des ermittelten ΔE-Werts wurde die Lichtbeständigkeit der Trägermaterialien folgendermaßen beurteilt (s. Tabelle 1):

| | |
|---|---|
| +: | ΔE < 5 |
| -: | ΔE > 5 |

### Industrielle Kompostierbarkeit

Die industrielle Kompostierbarkeit wird nach DIN EN 13432 Ber 2:2007-10 ermittelt. Hierbei werden die Ergebnisse folgendermaßen beurteilt:

| | |
|---|---|
| +: | Die Voraussetzungen der industriellen Kompostierbarkeit gemäß der Norm DIN EN 13432 Ber 2:2007-10 sind erfüllt, |
| -: | Die Voraussetzungen der industriellen Kompostierbarkeit gemäß der Norm DIN EN 13432 Ber 2:2007-10 sind nicht erfüllt. |

### Herstellung des Rohpapiers

Die Rohpapiere wurde aus Eukalyptus-Zellstoff hergestellt. Zur Mahlung wurde der Zellstoff als etwa 5 %ige wässrige Suspension (Dickstoff) mit Hilfe eines Refiners auf einen Mahlgrad von 36 °SR gemahlen. Die mittlere Faserlänge betrug 0,64 mm. Die Konzentration der Zellstofffasern im Dünnstoff betrug 1 Gew.-%, bezogen auf die Masse der Zellstoffsuspension. Dem Dünnstoff wurden Zusatzstoffe zugesetzt wie kationische Stärke in einer Menge von 0,4 Gew.-%, als ein neutrales Leimungsmittel Alkylketendimer (AKD)in einer Menge von 0,48 Gew.-%, Nassfestmittel Polyamin-Polyamid-Epichlorhydrinharz (Kymene^{®}) in einer Menge von 0,36 Gew.-% und ein natürliches CaCOs in einer Menge von 10 Gew.-%. Die Mengenangaben beziehen sich auf die trockene Zellstoffmasse. Der Dünnstoff, dessen pH-Wert auf etwa 7,5 eingestellt wurde, wurde vom Stoffauflauf auf das Sieb der Papiermaschine gebracht, worauf die Blattbildung unter Entwässerung der Bahn in der Siebpartie der Papiermaschine er-folgte. In der Pressenpartie erfolgte die weitere Entwässerung der Papierbahn auf einen Wassergehalt von 60 Gew.-%, bezogen auf das Bahngewicht. Die weitere Trocknung erfolgte in der Trockenpartie der Papiermaschine mit beheizten Trockenzylindern. Es entstand ein Rohpapier mit einem Flächengewicht von 160 g/m² und einer Feuchte von etwa 7%.

Das Rohpapier wird auf beiden Seiten mit einer Streichmasse aus einem Styrolacrylat-Binder, Stärke und einer Pigmentmischung aus Calciumcarbonat und Kaolin mit einem Auftragsgewicht von je 15 g/m² gestrichen, getrocknet und anschließend mit einem Kalander geglättet. Das so erhaltene Material wird im Folgenden als Rohpapier bezeichnet

### Herstellung der Vergleichsträgermaterialien A und B

Beide Seiten des Rohpapiers wurden mit einer Polyethylen-Titandioxidmischung aus 20 Gew.-% eines Polyethylens niedriger Dichte (LDPE, 0,923 g/cm³), 70 Gew.-% eines Polyethylens hoher Dichte (HDPE, d=0,964 g/cm³), 10 Gew.-% Titandioxid (Rutil) mit einem Auftragsgewicht von etwa 20 g/m² im Laminator bei einer Geschwindigkeit von etwa 250 m/min beschichtet. Die Kühlzylinder wurden so gewählt, dass die resultierenden Oberflächen beider Seiten des Trägermaterials eine Rauigkeit Rz, bestimmt nach DIN 4768, von 0,9 µm aufweisen. Die erhaltenen Trägermaterialien werden im Folgenden mit **Vergleichsträgermaterial A** bezeichnet, sie zeigen beidseitig eine hochglänzende Oberfläche.

In gleicher Weise wurde das Rohpapier mit der gleichen Polyethylen-Titandioxidmischung beidseitig extrusionsbeschichtet, wobei die Kühlzylinder derart ausgewählt wurden, dass die resultierende Oberfläche der Seite, auf der in der späteren Verwendung des Trägermaterials im Fotopapier die Bildempfangsschicht aufgetragen wird, eine Rauigkeit Rz, bestimmt nach DIN 4768, von 11,2 µm aufweist und die andere Seite eine Rauigkeit Rz, bestimmt nach DIN 4768, von 14,1 µm aufweist. Die erhaltenen Trägermaterialien werden im Folgenden mit **Vergleichsträgermaterial B** bezeichnet, sie zeigen auf der Seite, auf die in der späteren Verwendung des Trägermaterials im Fotopapier die Bildempfangsschicht aufgetragen wird, eine matt strukturierte Oberfläche.

### Herstellung der erfindungsgemäßen Trägermaterialien C und D

Beide Seiten des Rohpapiers wurden mit einem Polymilchsäure- Copolymermischung beschichtet. Die Vorderseite wird speziell mit einer Titandioxidmischung aus 14 Gew.-%, Blaupigmentmischung 5 Gew. %, Violettpigmentmischung 5,81 Gew. % und dem Polymilchsäure- Copolymer (Dichte 1,25 g/cm³) von 75,6 Gew.-%, mit einem Auftragsgewicht von etwa 20 g/m² im Laminator bei einer Geschwindigkeit von etwa 250 m/min beschichtet. Die Kühlzylinder wurden so gewählt, dass die resultierenden Oberflächen beider Seiten eine Rauigkeit von 0,9 µm aufweisen, gemessen als Rz-Wert nach DIN 4768. Die erhaltenen Materialien werden im Folgenden mit **erfindungsgemäßes Trägermaterial C** bezeichnet, sie zeigen beidseitig eine hochglänzende Oberfläche.

In gleicher Weise wurde das Rohpapier mit der gleichen Polymilchsäure-Copolymermischung extrusionsbeschichtet, wobei die Kühlzylinder derart ausgewählt wurden, dass die resultierende Oberfläche der Seite, auf der in der späteren Verwendung des Trägermaterials im Fotopapier die Bildempfangsschicht aufgetragen wird, eine Rauigkeit Rz, bestimmt nach DIN 4768, von 11,2 µm aufweist und die andere Seite eine Rauigkeit Rz von 14,1 µm aufweist. Die erhaltenen Materialien werden im Folgenden mit **erfindungsgemäßes Trägermaterial D** bezeichnet, sie zeigen auf der Seite, auf die in der späteren Verwendung des Trägermaterials im Fotopapier die Bildempfangsschicht aufgetragen wird, eine matt strukturierte Oberfläche.

Beide Oberflächen der Trägermaterialien A bis D wurden nach Bestrahlung mit einer Corona-Entladung mit einer der nachfolgenden Streichmassen 1 bzw. 2 beschichtet und getrocknet. Die Auftragsmenge der Streichmasse wurde so gewählt, dass sich ein Trockenauftrag von 0,5 g/m² ergibt. Die Zusammensetzung der Streichmassen ist nachfolgend angegeben.

**Streichmasse 1 (übliche Haftschicht):** 6,0 g Gelatine, 1,0 g Chromalaun, 10,0 g Isopropanol, 7,0 g Butanol, 76,0 g Wasser.

**Streichmasse 2 (Haftschicht mit verbesserter Haftung):** 5,2 g Gelatine, 10,0 g Isopropanol, 6,6 g Butanol, 1,0 g Glycerin, 1,5 g Natriumnitrat, 0,1 g Chromalaun, 2,6 g PE-Wachsdispersion (Lubaprint^{®} VP 760/D (Hersteller L.P. Bader, Rottweil, Deutschland)), 73,0 g Wasser

Die derart erhaltenen Trägermaterialien wurden den oben beschriebenen Prüfmethoden untersucht. Die Ergebnisse dieser Untersuchungen können der nachfolgenden Tabelle 1 entnommen werden.

Wie der Tabelle 1 zu entnehmen ist, weisen die erfindungsgemäßen Trägermaterialien C und D vergleichbare Lichtbeständigkeiten auf, wie die Vergleichsträgermaterialien A und B. Während die erfindungsgemäßen Trägermaterialien den Voraussetzungen der industriellen Kompostierbarkeit gemäß DIN EN 13432 Ber 2:2007-10 genügen, ist dies bei den Vergleichsmaterialien A und B nicht der Fall. Ferner kann Tabelle 1 entnommen werden, dass die Trägermaterialien, die mit einer Haftschicht gemäß Streichmasse 2 beschichtet wurden, bessere Ergebnisse im Verklebungstest erreichen.

**Tabelle 1**

| **Versuch-Nr.** | **Trägermaterial /Streichmasse** | **Oberfläche** | **Oberflächenwiderstand Ohm/cm** | **Verklebungstest** | **Emulsionshaftung** | **Xenon-Test** | **Kompostier barkeit** | **Erfindungsg emäß JA/NEIN** |
|---|---|---|---|---|---|---|---|---|
| **1** | A/1 | glänzend | 13,2 | - | + | + | - | NEIN |
| **2** | A/2 | glänzend | 10,1 | + | - | + | - | NEIN |
| **3** | B/1 | matt | 13,3 | - | + | + | - | NEIN |
| **4** | B/2 | matt | 10,2 | + | - | + | - | NEIN |
| **5** | C/1 | glänzend | 13,2 | - | + | + | + | JA |
| **6** | C/2 | glänzend | 9,9 | + | - | + | + | JA |
| **7** | D/1 | matt | 13,1 | - | + | + | + | JA |
| **8** | D/2 | matt | 10,1 | + | - | + | + | JA |

## Patentansprüche

1. Kompostierbares Trägermaterial für Fotopapiere, umfassend eine Papierschicht sowie auf mindestens einer Seite der Papierschicht eine bioabbaubare Polymerschicht.

2. Kompostierbares Trägermaterial nach Anspruch 1, **dadurch gekennzeichnet, dass** die bioabbaubare Polymerschicht mindestens ein bioabbaubares Polymer und optional mindestens einen Füllstoff umfasst.

3. Kompostierbares Trägermaterial nach Anspruch 2, **dadurch gekennzeichnet, dass** das bioabbaubare Polymer ein bioabbaubares Biopolymer ist.

4. Kompostierbares Trägermaterial nach Anspruch 3, **dadurch gekennzeichnet, dass** das mindestens eine bioabbaubare Biopolymer ausgewählt ist aus der Gruppe, bestehend aus Polyhydroxyalkanoaten, Polymilchsäure, Thermoplastische Stärke (TPS), Celluloseacetat, Celluloseether, Celluloseester, Chitosan sowie deren Mischungen.

5. Kompostierbares Trägermaterial nach Anspruch 2 bis 4, **dadurch gekennzeichnet, dass** der Füllstoff ausgewählt ist aus der Gruppe, bestehend aus Calciumcarbonat, Aluminiumoxid, Aluminiumhydroxid, Böhmit, Ton, kalzinierten Tonen, Kaolinen, Talkum, Kieselgur, Aluminiumtrihydrat, Kieselsäuren, Titandioxid, Zinksulfid sowie deren Mischungen

6. Kompostierbares Trägermaterial nach einem der Ansprüche 2 bis 5, **dadurch gekennzeichnet, dass** die bioabbaubare Polymerschicht mindestens 30 Gew.-% bioabbaubares Biopolymer und mindestens 1 Gew.-% Füllstoff, jeweils bezogen auf das Trockengewicht der gesamten bioabbaubaren Polymerschicht, umfasst.

7. Kompostierbares Trägermaterial nach einem der vorhergehenden Ansprüche, **dadurch gekennzeichnet, dass** es die Voraussetzungen der Norm DIN EN 13432 Ber 2 2:2007-10 erfüllt.

8. Kompostierbares Trägermaterial nach einem der vorhergehenden Ansprüche, **dadurch gekennzeichnet, dass** es eine Lichtbeständigkeit, gemessen als ΔE Wert entsprechend der Norm DIN EN ISO/CIE 11664-4: 2020-03, von kleiner 5 aufweist.

9. Fotopapier, umfassend ein kompostierbares Trägermaterial nach einem der Ansprüche 1 bis 8.

10. Fotopapier nach Anspruch 9, wobei das kompostierbare Trägermaterial auf der Sichtseite der bioabbaubaren Polymerschicht eine Bildempfangsschicht aufweist.

11. Fotopapier nach Anspruch 10, wobei die Bildempfangsschicht ausgewählt ist aus einer Emulsionsschicht für die Silbersalzfotografie, einer toneraufnehmenden Schicht für die Elektrofotografie oder einer Tintenaufnahmeschicht für den Ink-Jet Druck.

12. Verwendung des kompostierbaren Trägermaterials nach einem der Ansprüche 1 bis 8 in einem Fotopapier nach einem der Ansprüche 9 bis 11.

13. Verfahren zur Herstellung eines Fotopapiers nach einem der Ansprüche 9 bis 11, umfassend die folgenden Schritte:
(a) Bereitstellen einer Papierschicht;
(b) Beschichten der Papierschicht auf mindestens einer Seite mit einer bioabbaubaren Polymerschicht;
(c) Optionales Beschichten der bioabbaubaren Polymerschicht mit einer Haftschicht;
(d) Beschichten der in Schritt (b) aufgebrachten bioabbaubaren Polymerschicht oder der im optionalen Schritt (c) aufgebrachten Haftschicht mit einer Bildempfangsschicht.

14. Verfahren zur Herstellung nach Anspruch 13, **dadurch gekennzeichnet, dass** das Beschichten in Schritt (b) mittels Extrusion, Vorhangbeschichtung, Aufrakeln, Filmpresse, Leimpresse, Kaschieren oder Laminieren erfolgt.

15. Verfahren zur Herstellung nach Anspruch 13 oder 14, **dadurch gekennzeichnet, dass** das Aufbringen der bioabbaubaren Polymerschicht in Schritt (b) und das Aufbringen der Haftschicht in Schritt (c) gleichzeitig mittels Coextrusion erfolgt.
